(19) Europäisches Patentamt
European Patent Office
Office européen des brevets

(11) **EP 4 151 701 A1**

(12) **EUROPEAN PATENT APPLICATION**
published in accordance with Art. 153(4) EPC

(43) Date of publication:
**22.03.2023 Bulletin 2023/12**

(21) Application number: **21805169.6**

(22) Date of filing: **14.05.2021**

(51) International Patent Classification (IPC):
*C09K 17/02* (2006.01)     *C09K 101/00* (2006.01)

(52) Cooperative Patent Classification (CPC):
**C09K 17/02**

(86) International application number:
**PCT/KR2021/006094**

(87) International publication number:
**WO 2021/230716 (18.11.2021 Gazette 2021/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.05.2020 KR 20200057668**

(71) Applicant: **Shin Poong NCS Co., Ltd**
**Gumi-si, Gyeongsangbuk-do 39160 (KR)**

(72) Inventor: **CHO, Jae Baek**
**Chilgok-gun Gyeongsangbuk-do 39877 (KR)**

(74) Representative: **Cabinet Becker et Associés**
**25, rue Louis le Grand**
**75002 Paris (FR)**

(54) **CALCIUM-BASED BENTONITE, AND SOIL-IMPROVING AGENT INCLUDING SAME**

(57) The present invention relates to a calcium-based bentonite and a soil-improving agent including same. More specifically, the calcium-based bentonite is characterized by including a peak at a 2θ value of 4° to 8° in an X-ray diffraction (XRD) graph.

[FIG. 1]

**Description**

**[Technical Field]**

The present invention relates to calcium-based bentonite and a soil-improving agent including the same, and more particularly, the calcium-based bentonite includes a peak at a 2θ value of 4° to 8° in an X-ray diffraction (XRD) graph.

**[Background Art]**

In general, plants growing in the soil absorb many nutrients from the soil. The soil basically has many nutrients, but if plants continuously absorb these nutrients, the quality of the soil is gradually lowered and eventually, the soil is not an environment for plants to grow, and in the case of agriculture, a decrease in productivity is caused.

On the other hand, in a wild environment, if plants growing in the wild die, due to the composting of these plants, the composting of fallen leaves from trees, and the influx of nutrients from other soils that are moved by rainwater, the environment in which plants grow may be continuously supplied without changing at all.

However, in the case of agriculture, herbicides are periodically sprayed to remove weeds, and chemical fertilizers and organic fertilizers are often used to supplement lacking nutrients in crops. However, when using a lot of chemical fertilizers, the nutrients required for crops may be provided, but the overall balance of the soil is disrupted by these chemical fertilizers. As a result, even if a lot of chemical fertilizers are added, it is difficult to produce the good quality of crops due to the imbalanced soil, and the productivity of crops is also reduced.

As such, in order to prevent soil damage caused by chemical fertilizers, organic fertilizers, that is, compost, are also frequently used, but nutrients supplied from the compost are washed away by rainwater, etc., so the effect of compost is a temporary method that is applied only to one season. That is, there is a problem in that new compost needs to be sprayed for every farming season, and there is a problem in that it is difficult to provide all of the nutrients required by crops only with compost.

Accordingly, in order to improve the fundamental soil quality of the soil, the grown soil is periodically fallowed, or the soil rich in nutrients is covered or mixed. In addition, agricultural soil is used commercially.

In the case of periodic fallow of soil, the economic loss of fallow is enormous, so that in most farms, there is hardly any fallow. In addition, even when the soil rich in nutrients is covered, the covering can not be done many times, and the cost is not cheap. Accordingly, many soil-improving agents for fundamentally improving the soil quality are known. However, these soil-improving agents need to be prepared by mixing many separate soil materials, and thus, have a disadvantage in that the unit price is increased. In addition, since these soil-improving agents also exert the effect of soil improvement over a short period of time, in the case of soil with very poor soil quality, it is necessary to periodically supply the soil-improving agents, so that there is a disadvantage of ultimately increasing the production cost of crops.

Therefore, there is no separate manufacturing method, and it is preferred to provide a soil-improving agent that can effectively improve the soil quality by maintaining nutrients in the soil for a long period of time.

Accordingly, the present inventors developed calcium-based bentonite that may be suitably used as a soil-improving agent while researching to solve these problems, found that when crops were grown by fertilizing the calcium-based bentonite to the soil, healthy crops may be grown more continuously without adding additional chemical fertilizers, and then completed the present invention.

In this regard, in Korean Patent Publication No. 10-2020-0126481, there is disclosed a manufacturing process of a soil-improving agent using a novel *Trichoderma herbarium* strain.

**[Disclosure]**

**[Technical Problem]**

The present invention has been derived to solve the problems of the prior art, and an object of the present invention is to provide bentonite for a soil-improving agent.

Further, another object of the present invention is to provide a soil-improving agent including the bentonite.

**[Technical Solution]**

As a technical solution for achieving the technical problem, an aspect of the present invention provides bentonite for a soil-improving agent, in which the bentonite is calcium (Ca)-based bentonite, and is characterized by including a peak at a 2θ value of 4° to 8° in an X-ray diffraction (XRD) graph.

The bentonite for the soil-improving agent may include 50 parts by weight to 99 parts by weight of montmorillonite based on 100 parts by weight of the total bentonite.

The bentonite for the soil-improving agent may further include a material selected from the group consisting of $SiO_2$, $Al_2O_3$, $Fe_2O_3$, CaO, MgO, $K_2O$, $Na_2O$, $TiO_2$, $P_2O_5$, MnO, and combinations thereof.

With respect to 100 parts by weight of the $SiO_2$, the content of $Al_2O_3$ may be 20 parts by weight to 30 parts by weight, the content of $Fe_2O_3$, CaO or MgO may be 1 part by weight to 10 parts by weight, and the content of $K_2O$, $Na_2O$, $TiO_2$, $P_2O_5$ or MnO may be 0.01 part by weight to 5 parts by weight.

The bentonite for the soil-improving agent may have a powdered or granular form.

1 kg to 5 kg of the powdered bentonite for the soil-improving agent may be irrigated and fertilized in an area of 100 pyeong to 500 pyeong.

10 kg to 350 kg of the granular bentonite for the soil-improving agent may be mixed and fertilized with the soil or sprayed on the soil surface in an area of 100 pyeong to 500 pyeong.

In the bentonite for the soil-improving agent, in the case of excessive nutritive growth such as excessive growth, overgrowth, and succulent growth of a target crop, the bentonite for the soil-improving agent may be irrigated with 70 g to 2 kg/300 pyeong soil, and/or based on 70 g to 2 kg, a 500 to 1,000-fold dilution of the bentonite for the soil-improving agent, a 100 to 500-fold dilution of an inhibitor and a 1,500 to 2,500-fold dilution of a microelement may be foliar-fertilized.

In the bentonite for the soil-improving agent, in the case of water loss in the soil, drought, and improvement of plant balance, the bentonite for the soil-improving agent may be irrigated with 70 g to 2 kg/300 pyeong soil and fertilized.

In the bentonite for the soil-improving agent, in the case of the occurrence of diseases such as root rot, soft disease, or powdery mildew of a target crop, based on 70 g to 2 kg, a 500 to 1,000-fold dilution of the bentonite for the soil-improving agent may be mixed with the corresponding disinfectant and foliar-sprayed, and/or the bentonite for the soil-improving agent may be irrigated with 70 g to 2 kg/300 pyeong soil.

In the bentonite for the soil-improving agent, in the case of growth degradation of crops caused by phytotoxicity, cold-weather damage, high temperature disorder, or gas disorder, the bentonite for the soil-improving agent and an amino acid agent may be irrigated with 70 g to 2 kg/300 pyeong soil, and/or based on 70 g to 2 kg, a 500 to 1,000-fold dilution of the bentonite for the soil-improving agent and a 100 to 1,000-fold dilution of an amino acid agent may be fertilized.

In the bentonite for the soil-improving agent, in the case of occurrence or prevention of excessive soil moisture, falling of crops due to climatic instability, salt disturbance, and replant failure, the bentonite for the soil-improving agent may be irrigated and fertilized with 70 g to 2 kg/300 pyeong soil, and/or based on 70 g to 2 kg, a 500 to 1,000-fold dilution of the bentonite for the soil-improving agent may be foliar-sprayed and fertilized.

In the bentonite for the soil-improving agent, in the case of poor growth, such as poor roots and low tree vigor, the bentonite for the soil-improving agent may be irrigated with 70 g to 2 kg/300 pyeong soil, and/or based on 70 g to 2 kg, a 500 to 1,000-fold dilution of the bentonite for the soil-improving agent and a 500 to 1,000-fold dilution of an amino acid agent may be foliar-sprayed and fertilized.

The bentonite for the soil-improving agent may be mixed with the soil, and an absolute value of a change in electrical conductivity (ms/cm) of the soil after 1 year calculated by Equation 1 below may be 50% or more.

[Equation 1]

$$\text{Electrical conductivity change (\%)} = \frac{\text{Electrical conductivity of soil after 1 year} - \text{Electrical conductivity of soil before treatment with bentonite}}{\text{Electrical conductivity of soil before treatment with bentonite}} \times 100$$

The bentonite for the soil-improving agent may be mixed with the soil, and a change in pH of the soil after 1 year calculated by Equation 2 below may be 5% or more.

[Equation 2]

$$\text{pH change (\%)} = \frac{\text{pH of soil after 1 year} - \text{pH of soil before treatment with bentonite}}{\text{pH of soil before treatment with bentonite}} \times 100$$

The bentonite for the soil-improving agent may mixed with the soil, and an absolute value of a change in total dissolved solid (TDS, ppm) of the soil after 1 year calculated by Equation 3 below may be 15% or more.

[Equation 3]

$$\text{TDS change (\%)} = \frac{\text{TDS of soil after 1 year} - \text{TDS of soil before treatment with bentonite}}{\text{TDS of soil before treatment with bentonite}} \times 100$$

In Equation 3, TDS may be calculated by Australian formula (EC X 700).

Another aspect of the present invention provides a soil-improving agent comprising the bentonite for the soil-improving agent.

The soil-improving agent may further include a material selected from the group consisting of potassium phosphate, calcium phosphate, sulfur, copper, iron, molybdenum, an amino acid agent, and combinations thereof.

**[Advantageous Effects]**

According to the present invention, when the bentonite for the soil-improving agent is fertilized in the soil, it is possible to preserve effective nutrients of the soil and prevent the removal of nutrients at the same time, increase the absorption rate of calcium, phosphoric acid, minerals and effective nutrients to smooth the outer skin of fruits, improve storage, and improve texture. In addition, it is possible to reduce nutrients existing in an insoluble state in the soil to a soluble state. In addition, it is possible to give assistance to proliferate effective microorganisms, develop micro-roots, prevent root rot, prevent viruses due to nutrient deficiency, and relieve stress on plants, and to smoothly absorb inorganic and organic nutrients from the soil.

In addition, when the bentonite for the soil-improving agent is regularly used, there are effects of leaf thickening, receptacle strengthening, lateral vein formation, decreasing and strengthening of leaf sizes, internode length shortening, stem thickening, color enhancement, reduction of fall phenomenon, hypertrophy of fruits, digestion and absorption of undigested nitrogen, and reduction of fruit cracking phenomenon of grapes in the rainy season.

**[Description of Drawings]**

FIG. 1 is a schematic diagram illustrating a chemical composition of bentonite according to an embodiment of the present invention.

FIG. 2 is a schematic diagram illustrating a swelling property of bentonite according to an embodiment of the present invention.

FIG. 3 is a table illustrating heavy metal components of bentonite according to Example of the present invention.

FIG. 4 is an XRD graph of bentonite according to Example of the present invention.

FIG. 5 is a test report of bentonite according to Example of the present invention.

FIGS. 6A and 6B are photographs showing electrical conductivity and pH result values of the soil according to Example of the present invention and Comparative Example, respectively.

FIGS. 7A and 7B are photographs showing TDS result values (Australian formula) of the soil according to Example of the present invention and Comparative Example, respectively.

FIG. 8 is a photograph showing states of eggplants grown according to Example of the present invention and Comparative Example, respectively.

FIG. 9 is a photograph showing the growing of eggplants according to Example of the present invention.

FIGS. 10A and 10B are photographs showing states of peppers grown according to Example of the present invention and Comparative Example, respectively.

FIG. 11 is a photograph showing states of deodeok grown according to Example of the present invention and Comparative Example, respectively.

FIG. 12 is a photograph showing states of Chinese cabbages grown according to Example of the present invention and Comparative Example, respectively.

FIG. 13 is a photograph showing states of rice grown according to Example of the present invention and Comparative Example, respectively.

FIG. 14 is a photograph showing a state of peach grown according to Example of the present invention.

FIG. 15 is a photograph showing a state of chives grown according to Example of the present invention.

FIG. 16 is a photograph showing states of apples grown according to Example of the present invention and Comparative Example, respectively.

FIG. 17 is a photograph showing a state of green pumpkins grown according to Example of the present invention.

FIG. 18 is a photograph showing a state of plums grown according to Example of the present invention.

FIG. 19 is a photograph showing root states of crops grown according to Example of the present invention and Comparative Example, respectively.

FIGS. 20A and 20B are photographs showing states of grass according to Example of the present invention and Comparative Example, respectively.

FIG. 21 is a photograph showing states of small green onions grown according to Example of the present invention and Comparative Example, respectively.

FIGS. 22A and 22B are photographs showing states of sesame grown according to Example of the present invention.

FIG. 23A is a photograph showing a state of Korean melon grown according to Comparative Example, and FIGS. 23B to 23G are photographs showing states of Korean melons grown according to Example of the present invention.

FIGS. 24A and 24B are photographs of measuring the sugar contents of Korean melons grown according to Example of the present invention and Comparative Example, respectively.

FIG. 25A is a photograph showing a state of tomato grown according to Example of the present invention, and FIG. 25B is a photograph showing states of tomato grown according to Example and Comparative Example of the present invention, respectively.

FIG. 26 is a photograph showing states of green onion grown according to Example of the present invention and Comparative Example, respectively.

FIG. 27 is a photograph showing a state of flower (Lisianthus) grown according to Example of the present invention.

**[Best Mode]**

Hereinafter, the present invention will be described in more detail. However, the present invention may be embodied in various different forms, and the present invention is not limited by examples described herein, and the present invention will be only defined by claims to be described below.

In addition, terms used in the present invention are used only to describe specific examples, and are not intended to limit the present invention. The singular expression includes the plural expression unless the context clearly dictates otherwise. Throughout the specification, unless explicitly described to the contrary, "comprising" a certain component means that other components may be further included, rather than excluding other components.

A first aspect of the present invention provides bentonite for a soil-improving agent, in which the bentonite is calcium (Ca)-based bentonite, and is characterized by including a peak at a $2\theta$ value of $4°$ to $8°$ in an X-ray diffraction (XRD) graph.

A second aspect of the present invention provides a soil-improving agent including the bentonite for the soil-improving agent according to the first aspect of the present invention.

Hereinafter, the bentonite for the soil-improving agent according to the first aspect of the present invention and the soil-improving agent according to the second aspect of the present invention will be described in detail.

In one embodiment of the present invention, the bentonite for the soil-improving agent may be calcium (Ca)-based bentonite. In general, the bentonite may be classified into calcium (Ca)-based or sodium (Na)-based bentonite, and the sodium (Na)-based bentonite may be used only in the soil under certain conditions, and there are problems that may occur according to a type of soil. On the other hand, the calcium (Ca)-based bentonite is not limited to soil under specific conditions, and may be used in various soils (conditions) to be very effective as a soil-improving agent.

In one embodiment of the present invention, smectite, which is a main component mineral constituting the bentonite, may be a hydroxyl aluminosilicate mineral in which a $SiO_4$ tetrahedral sheet and a $Al_2(OH)_6$ octahedral sheet, which are skeleton structures of silicate minerals, are bonded to each other at 2 : 1 to form a layered structure.

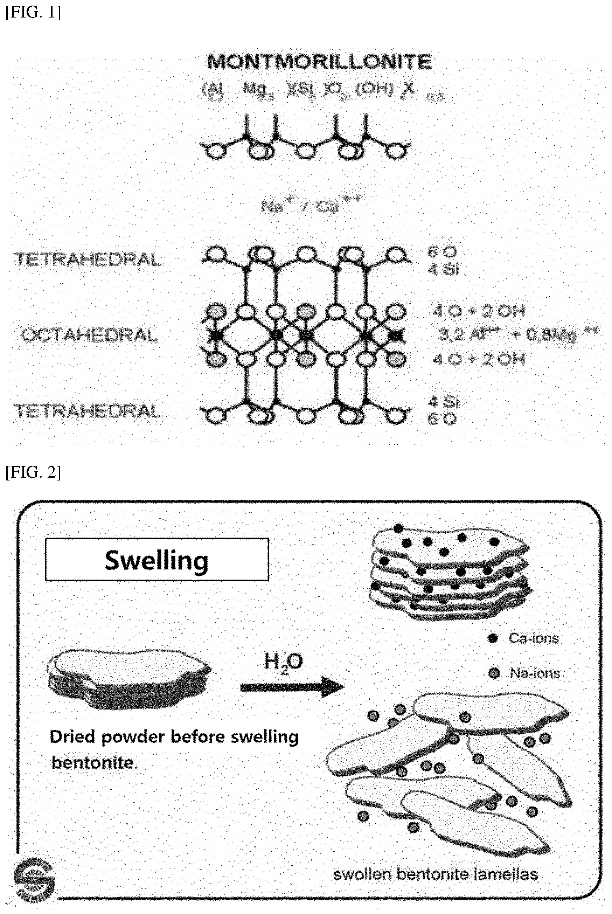

At this time, the 2 : 1 layer has a form in which one octahedral sheet is located in the center and two tetrahedral sheets are bonded to upper and lower sides of the octahedral sheet by facing each other, and a space between these basic units may be called an interlayer (see FIG. 1). The interlayer bond between the tetrahedral structural units is very weak, so that the layer may have an interlayer structure in which organic ions or molecules as well as cations and $H_2O$ may be easily interposed therebetween.

In one embodiment of the present invention, the bentonite has a swelling property of sucking water between the basic unit layers (interlayers), and the swelling property is indicated by a sedimentation volume occupied by 2 g of powdered bentonite in water, and it is known that the swelling property of Na-bentonite reaches 20 to 50 ml/2 g, and the swelling property of Ca-bentonite is 20 ml/2 g or less (see FIG. 2).

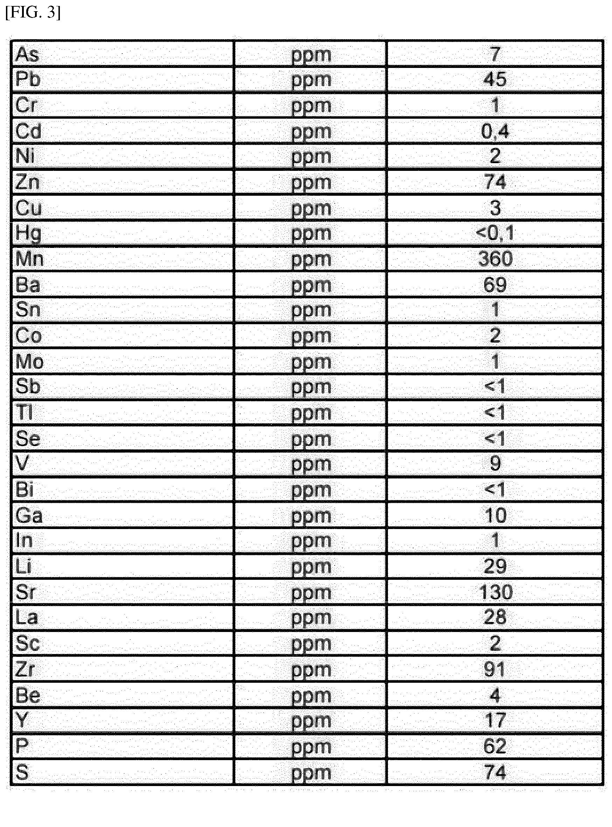

In one embodiment of the present invention, since the bentonite contains nutrients and inorganic compounds abundant in itself (see FIG. 3) and has a significant swelling property, the bentonite has effects of preserving useful nutrients originally present in the soil in the swollen space and preventing the removal of the nutrients at the same time to increase the absorption rate of calcium, phosphoric acid, minerals and effective nutrients, make the outer skin in the case of fruits clear and smooth, and help to increase storage and improve texture. In addition, due to the adsorption properties of bentonite, nutrients present in the soil in an insoluble form are adsorbed and reduced to a soluble form through cation exchange so that nutrients may be supplied to crops. In addition, a need for frequently supplying water is reduced due to the swelling property, and water may be stably supplied to the crops. In particular, there may be a greater effect in supplying water in dry weather.

In one embodiment of the present invention, the calcium (Ca)-based bentonite may include a peak at a $2\theta$ value of 4° to 8° in an X-ray diffraction (XRD) graph. In this case, the peak in the range means montmorillonite, and the bentonite for the soil-improving agent may include 50 to 99 parts by weight of montmorillonite with respect to 100 parts by weight of the total bentonite. In addition, the calcium (Ca)-based bentonite may also include peaks at $2\theta$ values of 21° to 24° and 34° to 40° in addition to the peak in the X-ray diffraction (XRD) graph, and the peaks in the range may mean quartz ($SiO_2$). In addition, the calcium (Ca)-based bentonite may further include peaks at $2\theta$ values of 27° to 29° and 30° to 32°, and the peaks in the range may mean feldspar. That is, the calcium (Ca)-based bentonite may include montmorillonite as a main component, but further include quartz and feldspar. Meanwhile, when the content of the montmorillonite is less than 50 parts by weight based on 100 parts by weight of the total calcium (Ca)-based bentonite, it may not be defined as calcium (Ca)-based bentonite, and when the content thereof is more than 99 parts by weight, since the content of an additional material to be described below is relatively small, there may be a problem in that the effect as a soil-improving agent is reduced.

In one embodiment of the present invention, the bentonite for the soil-improving agent may further include a material selected from the group consisting of $SiO_2$, $Al_2O_3$, $Fe_2O_3$, CaO, MgO, $K_2O$, $Na_2O$, $TiO_2$, $P_2O_5$, MnO, and combinations thereof.

In one embodiment of the present invention, the $SiO_2$ may serve as the spine of plants and a role of preventing falling in crops. In particular, the $SiO_2$ may play an important role in preventing falling in rice farming. In addition, the $SiO_2$ has a function of protecting the roots from rotting even when the soil is submerged or contains excessive moisture, thereby not only greatly reducing damage, but also reducing phytotoxicity of various pesticides, concentration disturbance (osmotic pressure) in case of excessive fertilizer use, and gas damage. In addition, the $SiO_2$ has a function of suppressing the excessive absorption of nitrogen and reducing the internode length, and secretes a long-term defense material in case of invasion of pathogens and the like involved in RNA and DNA into cells of crops to generate allelopathic materials, a phenolic compound, patotoxin and the like, thereby stopping the invasion of pathogens.

In one embodiment of the present invention, the $Al_2O_3$ may be present between two $SiO_2$ layers of bentonite, and has a physical structure that swells when coming into contact with water to have effects of preventing loss of water-soluble fertilizers, moisturizing the soil, and moisturizing crops.

In one embodiment of the present invention, the $Fe_2O_3$ may have a function of helping the coloring of fruits among agricultural products of crops. In addition, the CaO has a function of releasing calcium (Ca) bound to the salt insolubilized in the soil by bentonite to be pulled up to be used by plants, and makes the cells of agricultural products hard to increase the hardness of fruits.

In one embodiment of the present invention, the MgO is a component that is a raw material for chlorophyll to increase chlorophyll in the leaves of crops, and acts to promote photosynthesis when the chlorophyll increases to be helpful in speeding up the nutrient production capacity and growth cycles of the plants. In addition, the MgO may serve to help the movement of phosphoric acid.

In one embodiment of the present invention, the $K_2O$ may serve to transfer the nutrients to leaves when nutrients required by plants are absorbed in roots. In addition, the $K_2O$ may serve to help the coloring of fruits.

In one embodiment of the present invention, the $TiO_2$ as a metallic component may serve to increase the immunity of plant cells and strengthen the cells to enhance the disease resistance of crops.

In one embodiment of the present invention, the $P_2O_5$ may serve to make the main roots of the plant and help the hypertrophy of fruits. The roots of the plant are divided into main roots and fine roots, but materials involved in the generation of main roots are nitrogen, phosphorus, and moisture, and materials involved in the generation of rootlet (fine roots) are minerals, trace elements, and moisture (among elements named in the specification, elements required by plants in trace amounts are called trace elements, and materials that have not yet been named or have not yet been classified as trace elements of plants in the scientific community are collectively referred to as minerals).

In one embodiment of the present invention, the MnO is classified as a trace element of plants, and when the MnO is deficient, yellowing of the leaves may occur, and a problem of lowering tree vigor may occur.

In one embodiment of the present invention, with respect to 100 parts by weight of the $SiO_2$, the content of $Al_2O_3$ may be 20 parts by weight to 30 parts by weight, the content of $Fe_2O_3$, CaO or MgO may be 1 part by weight to 10 parts by weight, and the content of $K_2O$, $Na_2O$, $TiO_2$, $P_2O_5$ or MnO may be 0.01 part by weight to 1 part by weight. At this time, preferably, with respect to 100 parts by weight of the $SiO_2$, the content of $Al_2O_3$ may be 20 parts by weight to 25 parts by weight, the content of $Fe_2O_3$, CaO or MgO may be 2 part by weight to 6 parts by weight, the content of $K_2O$, $Na_2O$, $TiO_2$, or $P_2O_5$ may be 0.1 part by weight to 0.8 part by weight, and the content of MnO may be 0.01 part by weight to 0.1 part by weight. Meanwhile, according to an embodiment of the present invention, a weight mixing ratio of $SiO_2$, $Al_2O_3$, $Fe_2O_3$, CaO, MgO, $K_2O$, $Na_2O$, $TiO_2$, $P_2O_5$ and MnO may be 64.1 : 15.2 : 2.89 : 2.45 : 3.03 : 0.45 : 0.33 : 0.37 : 0.1 : 0.04. When the content range of the materials is less than or more than the range, the content ranges of other materials are relatively out of an appropriate range, and thus, as described above, the roles performed by the materials may be hindered. Accordingly, there may be a problem that the effect as the soil-improving agent is lowered.

In one embodiment of the present invention, the bentonite for the soil-improving agent is powdered so that 90% or more passes through 850 μm sieves, and a cation exchange capacity (CEC) is 80 cmol+/kg or more and the moisture content may be prepared to be 12% or less. However, in some cases, the bentonite may be prepared in a granular form instead of a powder.

In one embodiment of the present invention, when the bentonite for the soil-improving agent is in a powdered form, the bentonite may be applied to fruit vegetables represented by eggplant, pepper, Korean melon, strawberry, watermelon, cucumber, tomato, and pumpkin, vegetables represented by sesame leaves, Chinese cabbage, lettuce, spinach, and water parsley, bulb vegetables represented by garlic and onion, root vegetables represented by carrot and radish, special purpose crops such as cheongung and ginseng, crops such as sesame, barley, grass and corn, and fruits such as persimmon, chestnut, pear, peach, apple, and grape. At this time, in the fruits, the bentonite may be applied to a persimmon tree of 11 years or more in the case of the persimmon, a chestnut tree of 10 to 14 years in the case of the chestnut, a pear tree of 15 to 20 years or more in the case of the pear, a peach tree of 11 years or more in the case of the peach, an apple tree of 15 to 20 years or more in the case of the apple, and a graph tree of 11 years or more in the case of the graph. Meanwhile, the powdered bentonite may be characterized to be fertilized with 70 g to 2 kg in an area of 100 pyeong to 500 pyeong, preferably fertilized with 1 kg to 2 kg in an area of about 300 pyeong.

In one embodiment of the present invention, as countermeasures against the occurrence of poor flowering in the case of excessive nutritive growth such as excessive growth, overgrowth, and succulent growth, in the case of falling flowers, deformed fruits, deformed leaves, and fallen fruits, the powdered bentonite (bentonite powder) is irrigated with 70 g to 2 kg/300 pyeong soil and/or based on 70 g to 2 kg, a 500 to 1,000-fold dilution of a bentonite powder, a 100 to 500-fold dilution of an inhibitor (potassium phosphate, calcium phosphate) and a 2,000-fold dilution of a microelement (sulfur, copper, iron, molybdenum) may be foliar-fertilized. In this case, the dilution may mean diluted in water, for example, 100-fold dilution may mean diluted in water by 100 weight times. Meanwhile, all the dilutions in the following parts should be understood as the same meaning as above.

In one embodiment of the present invention, as a countermeasure against water loss in the soil, drought, and improvement of plant balance, the bentonite powder may be irrigated with 70 g to 2 kg/300 pyeong soil and fertilized.

In one embodiment of the present invention, as a countermeasure against the occurrence of various diseases such as root rot, soft disease, powdery mildew, based on 70 g to 2 kg, a 1,000-fold dilution of the bentonite for the soil-improving agent is mixed with the corresponding disinfectant and foliar-sprayed, and/or the bentonite powder may be irrigated with 70 g to 2 kg/300 pyeong soil.

In one embodiment of the present invention, as a countermeasure against growth degradation such as phytotoxicity, cold-weather damage, high temperature disorder, gas disorder, etc., the bentonite powder and an amino acid agent may be irrigated with 70 g to 2 kg/300 pyeong soil and/or based on 70 g to 2 kg, a 1,000-fold dilution of the bentonite powder and a 500-fold dilution of an amino acid agent may be foliar-sprayed.

In one embodiment of the present invention, as a countermeasure against occurrence and prevention of excessive soil moisture, falling of crops due to climatic instability (typhoon, rainy season), salt disturbance, and replant failure, the bentonite powder may be irrigated with 70 g to 2 kg/300 pyeong soil and fertilized and/or based on 70 g to 2 kg, a 500 to 1,000-fold dilution of the bentonite powder may be foliar-sprayed and fertilized.

In one embodiment of the present invention, as a countermeasure against poor growth, such as poor roots and low tree vigor, the bentonite powder may be irrigated with 70 g to 2 kg/300 pyeong soil and/or based on 70 g to 2 kg, a 1,000-fold dilution of the bentonite powder and a 500-fold dilution of an amino acid agent may be foliar-sprayed and fertilized.

In one embodiment of the present invention, when the bentonite for the soil-improving agent is in a granular form, the bentonite is applied to all crops applied to the powder described above, and may be applied to rice farming such as rice difficult to be applied to the powder, flowers and asparagus, and may be applied to citrus fruits, walnuts, plums, apricots and fruit trees. At this time, the granular bentonite may be characterized to be fertilized with 10 kg to 200 kg in an area of 100 pyeong to 500 pyeong, preferably fertilized with 10 kg to 200 kg in an area of about 300 pyeong.

In the case of the granular form, based on 1,000 m$^2$ (300 pyeong), preferably, the bentonite is fertilized with 10 to 20 kg for the rice farming, fertilized with 40 to 150 kg for the fruit vegetables, fertilized with 40 to 120 kg for the green vegetables, fertilized with 20 to 60 kg for the bulb vegetables, fertilized with 20 to 60 kg for the root vegetables, fertilized with 20 to 60 kg cheongung and fertilized with 60 to 150 kg for ginseng in special purpose crops, fertilized with 20 to 60 kg for the sesame and barley, fertilized with 30 kg for the grass, fertilized with 10 to 40 kg for the corn, fertilized with 40 to 80 kg for flowers and asparagus, and fertilized with 15 to 30 kg for fruit trees, but it is not limited thereto.

In one embodiment of the present invention, the bentonite for the soil-improving agent is mixed with the soil, and an absolute value of a change in electrical conductivity (ms/cm) of the soil after 1 year calculated by the following Equation 1 may be 50% or more.

[Equation 1]

$$\text{Electrical conductivity change (\%)}$$

$$= \frac{\text{Electrical conductivity of soil after 1 year} - \text{Electrical conductivity of soil before treatment with bentonite}}{\text{Electrical conductivity of soil before treatment with bentonite}} \times 100$$

In addition, the bentonite for the soil-improving agent is mixed with the soil, and a change in pH of the soil after 1 year calculated by the following Equation 2 may be 5% or more.

[Equation 2]

$$\text{pH change}(\%) = \frac{\text{pH of soil after 1 year} - \text{pH of soil before treatment with bentonite}}{\text{pH of soil before treatment with bentonite}} \times 100$$

At this time, the change in electrical conductivity (ms/cm) calculated by Equation 1 may have a negative (minus) value, and the change in pH calculated by Equation 2 may have a positive (plus) value. That is, when the bentonite for the soil-improving agent is mixed with the soil, the electrical conductivity (ms/cm) value may be decreased, and the pH may be increased. Meanwhile, the soil to be measured after 1 year may be soil mixed with the bentonite for the soil-improving agent, irrigated at intervals of 7 to 15 days, periodically managed, and grown with the crops.

To explain this in detail, first, in a principle of soil improvement, a high cation exchange capacity (CEC) (CEC 80 to 130) of bentonite may serve to store essential colloidal nutrients for plants when chain rings formed by strongly binding the bentonite with salts such as phosphate/calcium salt, which are insolubilized (strongly bound to salt) nutrients in the soil, are broken by $SiO_2$ (a silicon dioxide physicochemical composition contained in bentonite). In addition, due to the swelling property (swelling property when coming into contact with water, moisture retention) of bentonite, the bentonite may serve to store the holding nutrients while supplying nitrogen, phosphoric acid, potassium, magnesium, sulfur, and calcium, which are six major nutrients of plants, and potassium, nitrogen, trace elements, minerals, etc., which are water-soluble nutrients that are highly leached from water, so as to create a favorable environment for plants to grow.

In this case, the bentonite for the soil-improving agent according to the present invention is a material that has not been chemically treated, and contains a large amount of metallic components to have high electrical conductivity. However, as described above, as the plant performs the light reaction/dark reaction (as energy production action of the plant, which is the plant's energy "sugar" ATP as a final product), and the exchange action, the plant grows and the electrical conductivity may be lowered. At this time, when describing the exchange action in more detail, hydrogen ($H^+$) ions, which are cations, and oxygen ions ($O^-$), which are anions bound with nutrients of the plant, exchange and absorb nutrients at the tip of the root of the plant. Therefore, this may be referred to as an exchange action, and for example, in the case of $SiO_2$, $Si^+$, silicate ions, are absorbed by the exchange action, and nutrients stored by CEC may be stored in bentonite in the same form as colloidal ionic forms, $Si^+$ and $Ca^{2+}$. At this time, the nutrients stored in the form of ions are absorbed even if the plant does not laboriously emit root acids from the micro roots and rootlets (fine roots), so that the growth cycle is accelerated and it is more advantageous for the production of ATP "sugar", the plant energy.

Meanwhile, the bentonite is mixed with the soil and water is supplied and a soil improvement action starts at the same time. Since there are many metallic components among physicochemical components in bentonite (according to each group of the periodic table, classed into alkali metal elements (Na and K), alkaline earth metal element (Ca), aluminum group element (Al), zinc group element (Zn), titanium group element (Ti), chromium group element (Mo), manganese group element (Mn), iron group element (Fe), etc., and containing several metallic minerals in a heavy metal test, which is an XRF test), at the time of soil mixing, the electrical conductivity is rather increased. In addition, plants absorb elements necessary for plants (at the same time, bentonite acts on a soil improvement and the plants consume nutrients as described above) by planting and cultivating crops, and the soil is improved.

In addition, the bentonite is a mineral mainly composed of a silicic acid component, which serves as an essential spine for plants, and contains various essential trace elements and a large amount of minerals necessary for plants to also perform the action of taking rootlets (fine roots).

Meanwhile, the higher the salinity concentration of the soil (fertilizer component insolubilized in the soil = electrical conductivity = EC concentration), the greater the amount of microorganisms in the soil and an increase in the number of pathogens may occur. That is, various diseases may occur in the soil as described above, so the management of soil saline concentration may be very important, and in the case of high-concentration saline soil with high EC, while the microbial activity is reduced, nitrogen is accumulated to deteriorate crop growth, and calcium absorption inhibition and gas disturbances due to nitrite production may occur. Therefore, when the bentonite for the soil-improving agent according to the present invention is mixed with the soil, the electrical conductivity (EC concentration) value is lowered, thereby exhibiting the effect of soil improvement.

In one embodiment of the present invention, the bentonite is weakly alkaline, and may have a pH of about 7.7 to 8.9. That is, the acidic soil may be neutralized by fertilizing the bentonite on the farmland acidified by an excessive use of fertilizers and pesticides.

In one embodiment of the present invention, the bentonite for the soil-improving agent is mixed with the soil, and an absolute value of a change in total dissolved solid (TDS, ppm) of the soil after 1 year calculated by the following Equation 3 may be 15% or more.

[Equation 3]

$$\text{TDS change (\%)} = \frac{\text{TDS of soil after 1 year} - \text{TDS of soil before treatment with bentonite}}{\text{TDS of soil before treatment with bentonite}} \times 100$$

In this case, in Equation 3, TDS may be calculated by the Australian formula (EC X 700). The change in TDS may also have a negative (minus) value like the electrical conductivity. Therefore, when the bentonite for the soil-improving agent is mixed with the soil, the TDS (ppm) value may be decreased. Meanwhile, the soil to be measured after 1 year may mean soil mixed with the bentonite for the soil-improving agent, irrigated at intervals of 7 to 15 days, periodically managed, and grown with the crops.

In one embodiment of the present invention, the TDS may refer to minerals, salts, metals, cations, and anions dissolved in water, that is, mean a sum value of NaCl and $CaCl_2$ as total salts dissolved in a soil solution. At this time, the more total dissolved salt, the greater the damage from salt damage, and when the bentonite for the soil-improving agent according to the present invention is mixed with the soil, the TDS (ppm) value is lowered, thereby exhibiting the effect of soil improvement.

Hereinafter, Examples of the present invention will be described in detail so as to easily implement those skilled in the art. However, the present invention may be variously implemented and is not limited to the following Examples.

**Example. Preparation of bentonite for soil-improving agent**

Bentonite to be used for a soil-improving agent was prepared.

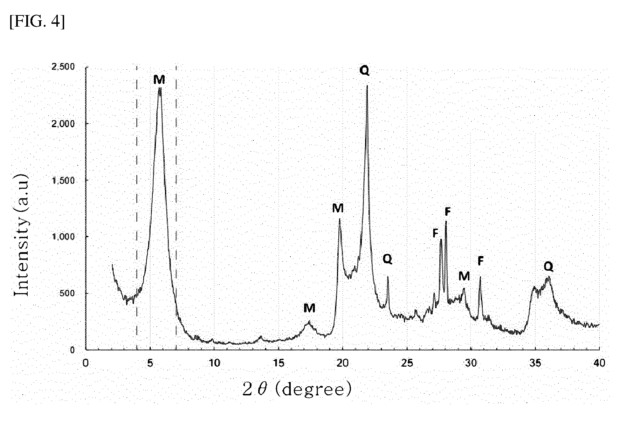

In this case, the bentonite was calcium (Ca)-based bentonite, and an XRD analysis result of the bentonite was illustrated in FIG. 4. As illustrated in FIG. 4, it was confirmed that the bentonite according to an example of the present invention exhibited a peak at a $2\theta$ value of 4° to 8° to be a calcium (Ca)-based bentonite containing montmorillonite, and further, it was confirmed that the bentonite included quartz ($SiO_2$, Q peak) and feldspar (F peak).

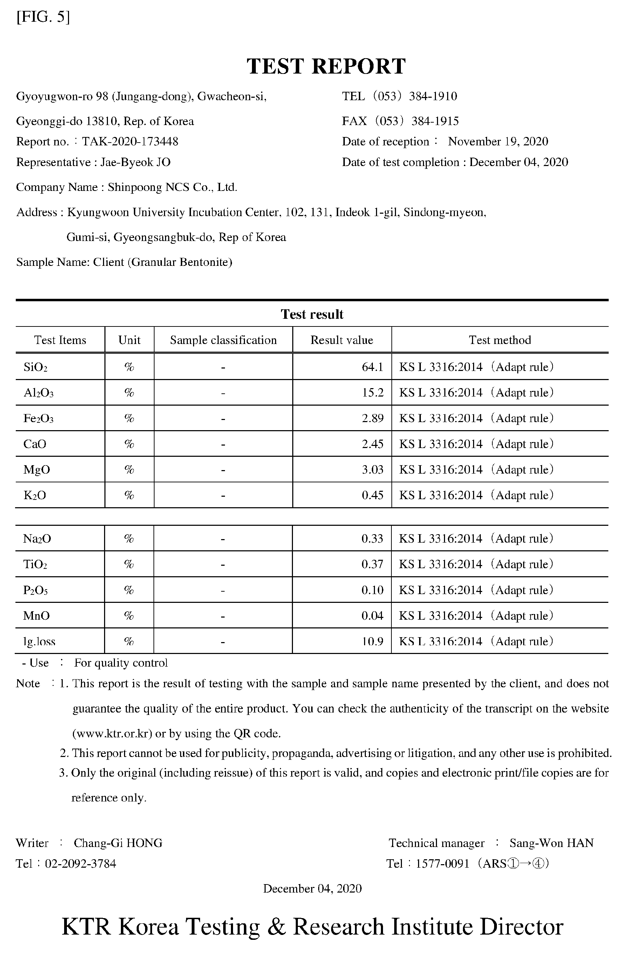

In addition, a physicochemical component analysis of the bentonite was requested to the Korea Testing and Research Institute, and the result report thereof was shown in FIG. 5. As shown in FIG. 5, it was confirmed that the bentonite according to Example of the present invention contained a large amount of components advantageous for cultivation of crops.

**Experimental Example 1. Measurement of electrical conductivity and pH**

When the bentonite for the soil-improving agent prepared in Example was fertilized in the soil, changes in electrical conductivity (EC) and pH were measured.

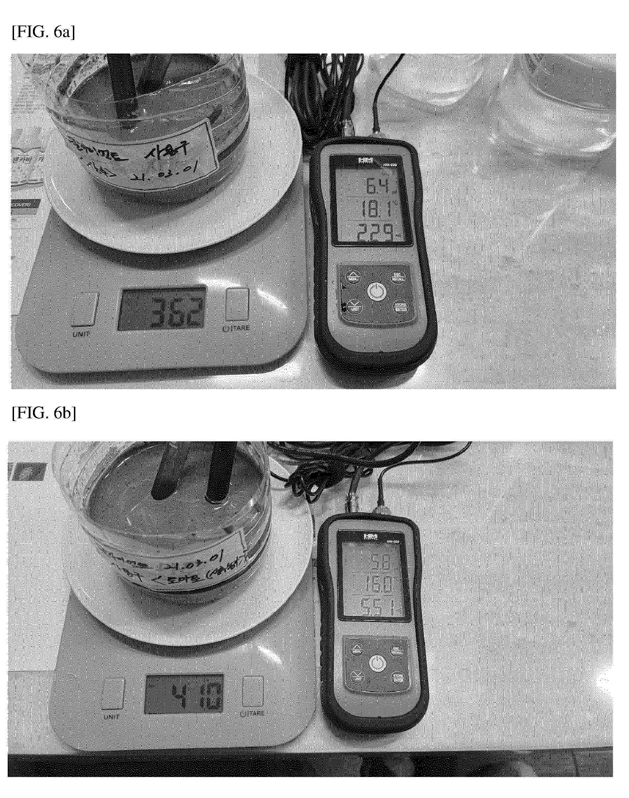

More specifically, before fertilizing the bentonite, the electrical conductivity and the pH of the soil were measured (Comparative Example), and the electrical conductivity and the pH were measured (Example) after 1 year of soil mixed with bentonite, irrigated at intervals of 7 to 15 days, periodically managed, and grown with crops, and then the result values thereof were shown in FIGS. 6A and 6B and Table 1.

[Table 1]

|  | Example | Comparative Example | Numerical change |
|---|---|---|---|
| Electrical conductivity (ms/cm) | 2.29 | 5.51 | - 3.22 |
| pH | 6.4 | 5.8 | + 0.6 |

As shown in Table 1 above, it could be confirmed that when the bentonite for the soil-improving agent according to Example of the present invention was fertilized in the soil, the electrical conductivity value was decreased, and the pH was slightly increased. Therefore, it could be confirmed that the saline content of the soil was reduced so that there was an improvement effect thereof, and it could be confirmed that the acidic soil was neutralized to create more suitable conditions for growing crops.

**Experimental Example 2. Measurement of TDS**

When the bentonite for the soil-improving agent prepared in Example was fertilized in the soil, changes in TDS were measured.

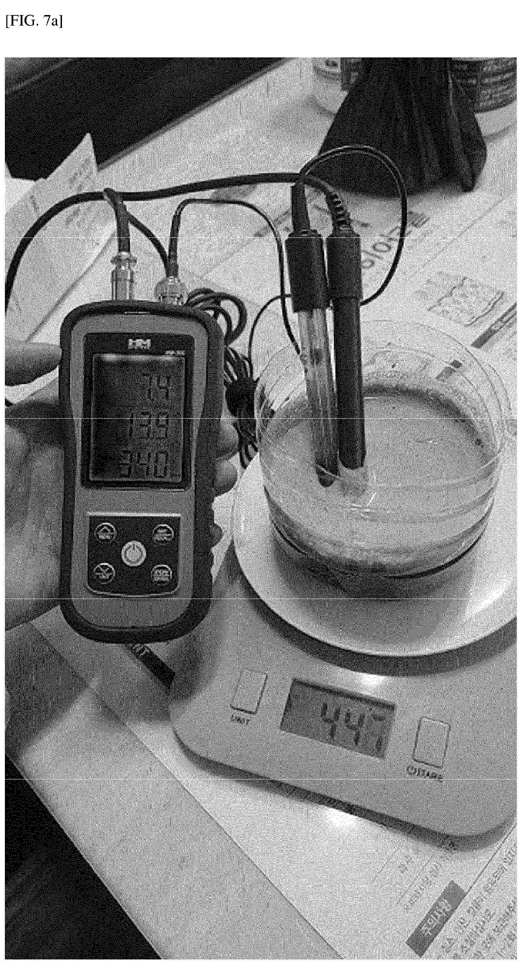

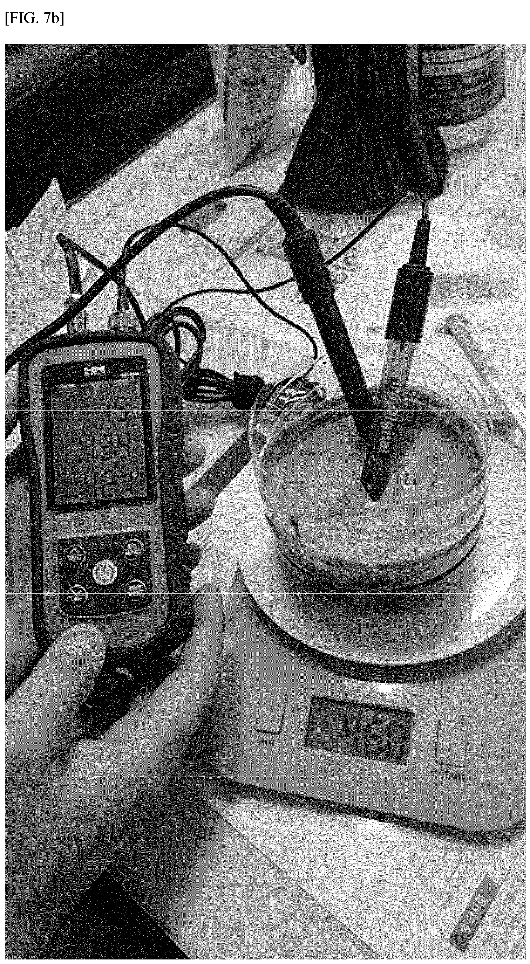

More specifically, before fertilizing the bentonite, the TDS of the soil was measured (Comparative Example), and the TDS was measured (Example) after 1 year of soil mixed with bentonite, irrigated at intervals of 7 to 15 days, periodically managed, and grown with crops, and then the result values thereof were shown in FIGS. 7A and 7B and Table 2 below.

[Table 2]

|  | Example | Comparative Example | Numerical change |
|---|---|---|---|
| TDS (ppm, Australian formula) | 340 | 421 | - 81 |

As shown in Table 2 above, it could be confirmed that when the bentonite for the soil-improving agent according to Example of the present invention was fertilized in the soil, the TDS value was decreased. Therefore, it could be confirmed that the total dissolved salt of the soil was reduced so that there was an improvement effect thereof.

**Experimental Example 3. Crop cultivation results**

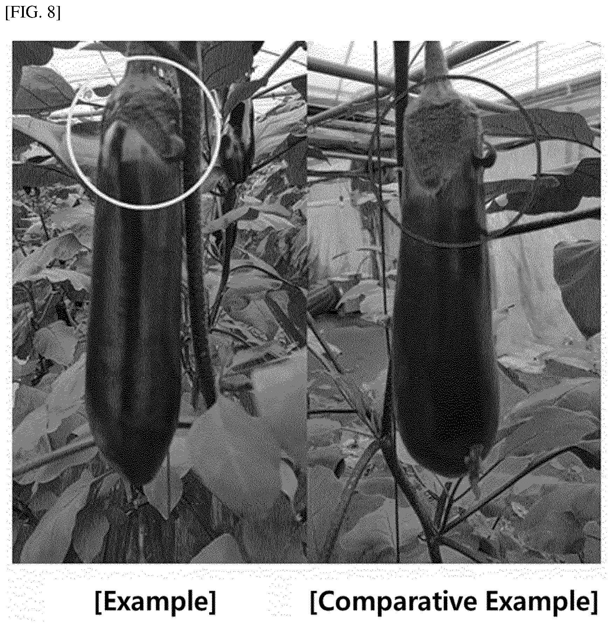

Various crops were grown by fertilizing the bentonite for the soil-improving agent prepared in Example to the soil, and the results thereof were shown in FIGS. 8 to 26, respectively.

1. Eggplants

As shown in FIG. 8, it was confirmed that eggplants of Comparative Example grown without treating bentonite for a soil-improving agent showed a bending phenomenon, which was a shoulder loss symptom at the apex, but eggplants of Example grown by treating the bentonite for the soil-improving agent grew while holding fruits having a pretty shape (fine roots was strong).

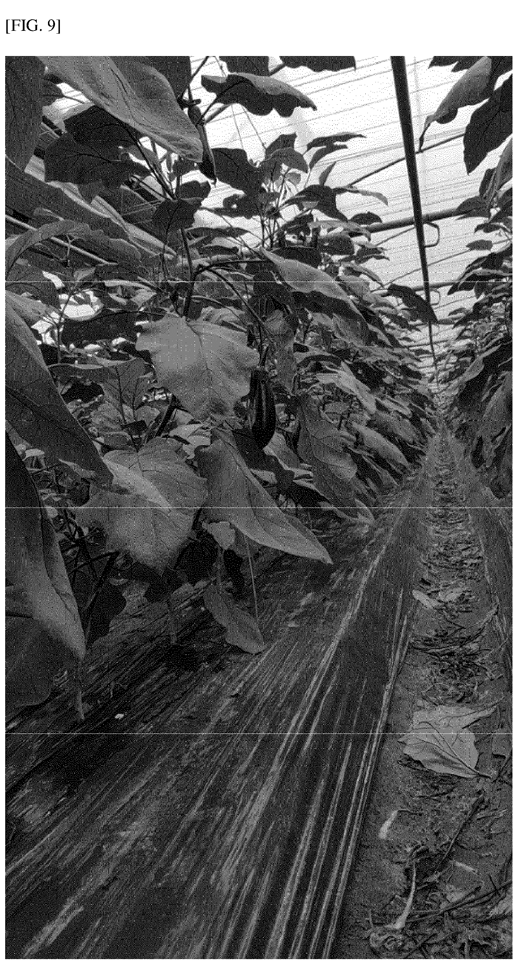

In addition, as shown in FIG. 9, it was confirmed that when the bentonite for the soil-improving agent was treated, a lot of regular fruits hung due to induction of root taking, and high quality and high yield were possible.

At this time, as a method of using the bentonite for the soil-improving agent, the soil irrigation was performed 3 to 4 times at intervals of 15 days.

2. Peppers

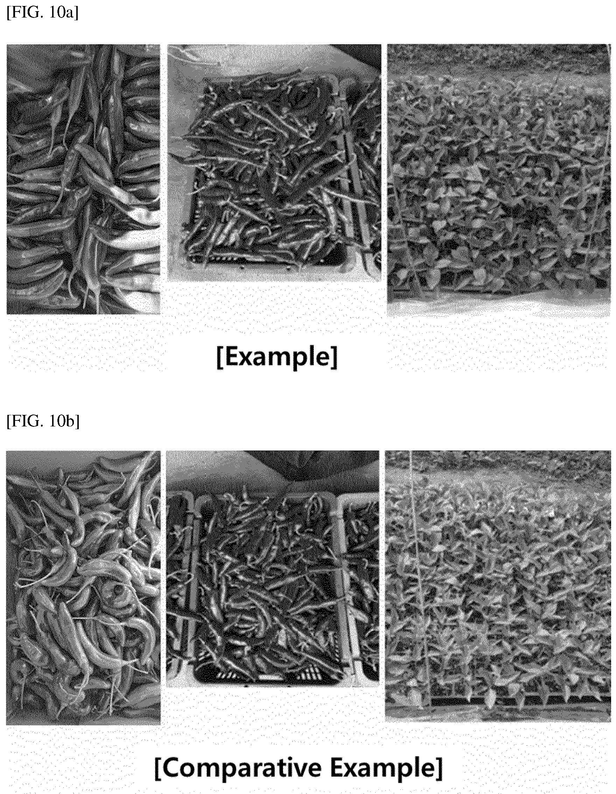

As shown in FIGS. 10A and 10B, it was confirmed that peppers of Example grown by treating the bentonite for the soil-improving agent were improved in coloring and hypertrophy compared to peppers of Comparative Example grown without treating the bentonite, and the growth was activated when pepper seedling culture was used.

3. Deodeok

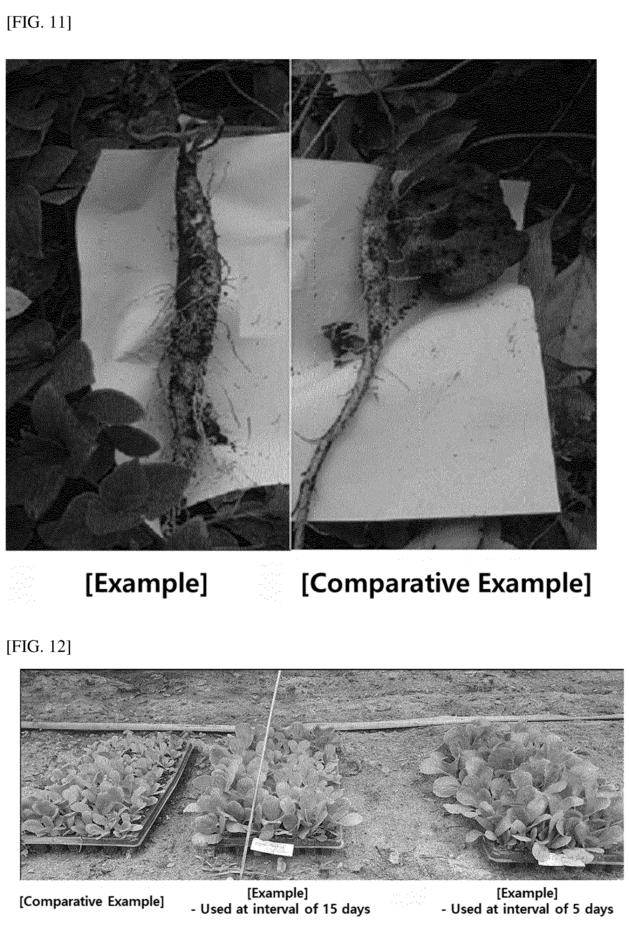

As shown in FIG. 11, it was confirmed that deodeok of Example grown by treating the bentonite for the soil-improving agent was improved in root sizes compared to deodeok of Comparative Example grown without treating the bentonite.

4. Chinese cabbage

As shown in FIG. 12, it was confirmed that Chinese cabbage of Example grown by treating the bentonite for the soil-improving agent grew strong in a very uniform state compared to Chinese cabbage of Comparative Example grown without treating the bentonite.

### 6. Rice

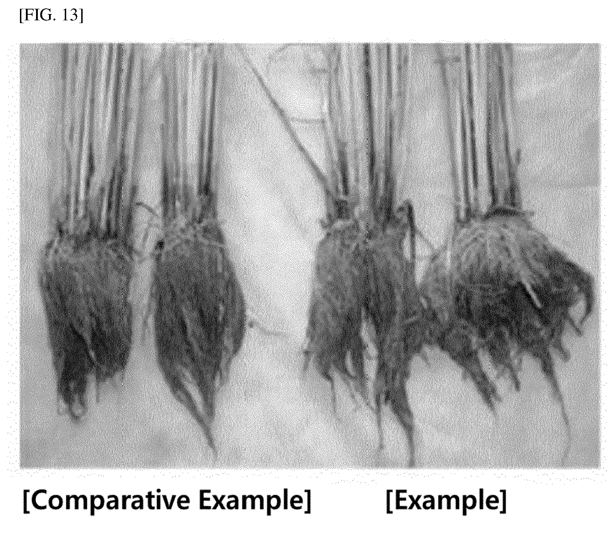

As shown in FIG. 13, it was confirmed that rice of Example grown by treating the bentonite for the soil-improving agent was more developed in roots than rice of Comparative Example grown without treating the bentonite.

### 7. Peach

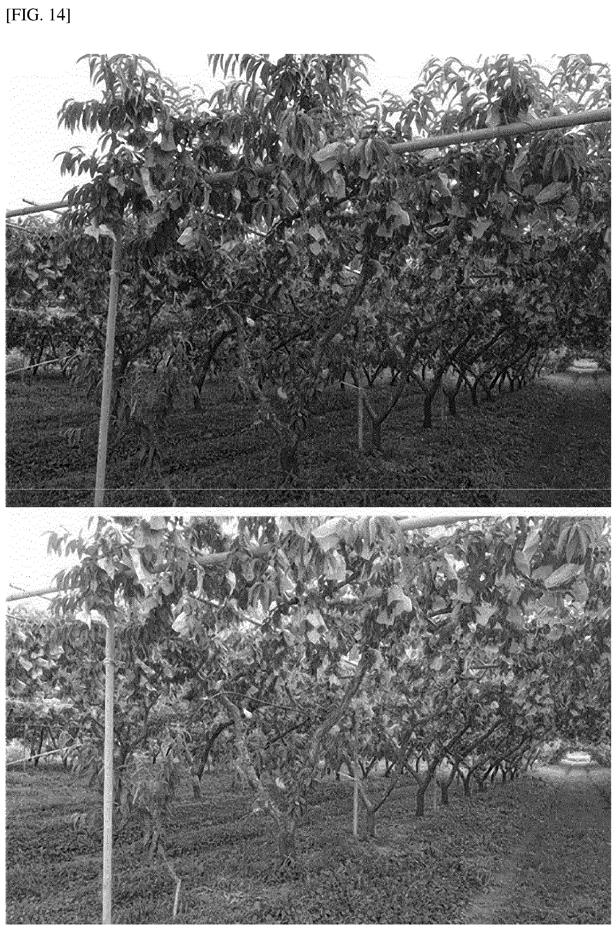

As shown in FIG. 14, it was confirmed that in peach of Example grown by treating the bentonite for the soil-improving agent, even if the fruits hung equal to or more than a threshold, the tree endured and a high yield was possible.

At this time, as a method of using the bentonite for the soil-improving agent, foliar spraying was performed at intervals of 7 to 10 days, and the recommended amount was 25 mal/500 g at intervals of 15 days.

### 8. Chives

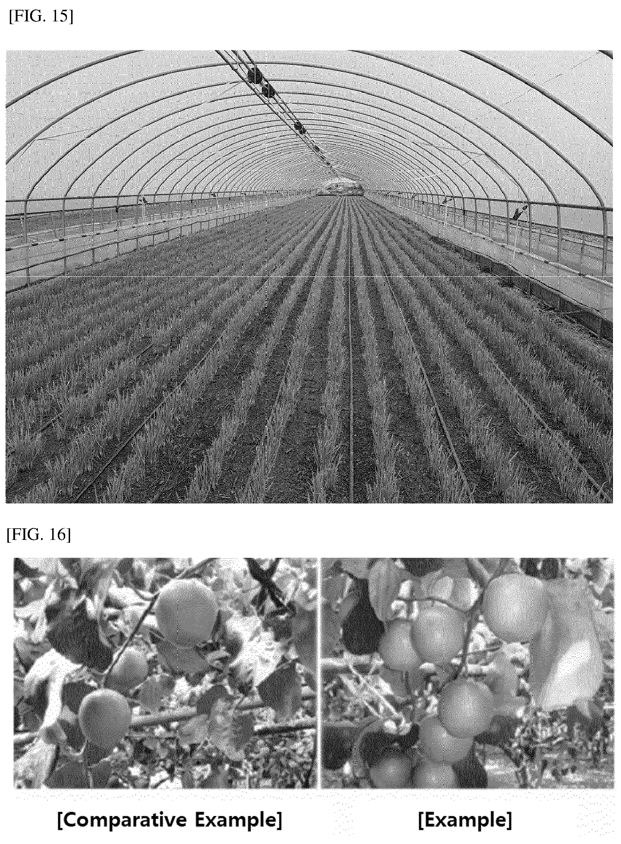

As shown in FIG. 15, it was confirmed that chives of Example grown by treating the bentonite for the soil-improving agent had strong fine roots in addition to a moisturizing effect to resolve the dryness of the leaf tip, and had a high organic silicic acid content to be stiffened.

### 9. Apples

As shown in FIG. 16, it was confirmed that apples of Example grown by treating the bentonite for the soil-improving agent were improved in pollination and the amount of fruits (increased yield and improved storage) compared to apples of Comparative Example grown without treating the bentonite.

### 10. Green pumpkins

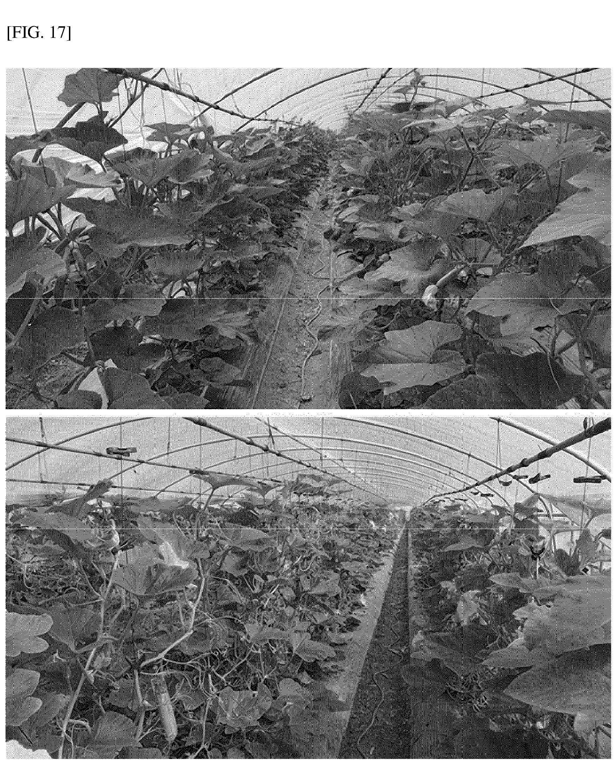

As shown in FIG. 17, it was confirmed that in green pumpkins of Example grown by treating the bentonite for the soil-improving agent, leaves became stiff and thick, and an aging phenomenon was slowed down. In addition, it was confirmed that a lot of regular fruits hung by inducing root taking, and high-quality and high yield were possible.

### 11. Plum

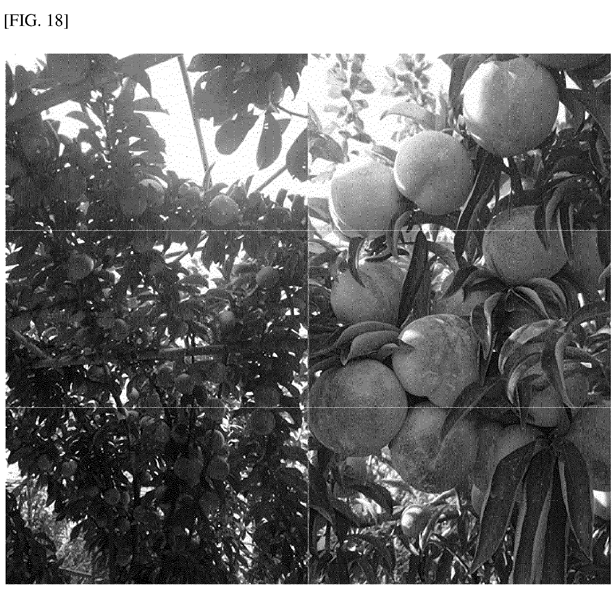

As shown in FIG. 18, it was confirmed that in plum of Example grown by treating the bentonite for the soil-improving agent, even if the fruits hung equal to or more than a threshold, the tree endured and a high yield was possible.

### 12. Crop roots

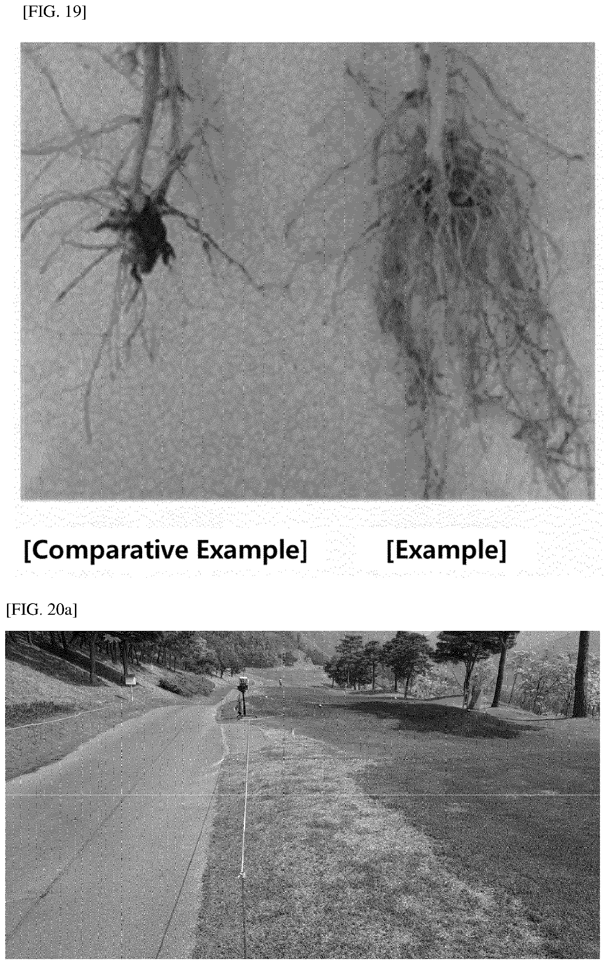

As shown in FIG. 19, it was confirmed that in crops of Example grown by treating the bentonite for the soil-improving agent, the roots have grown vigorously compared to crops of Comparative Example grown without treating the bentonite.

### 13. Grass

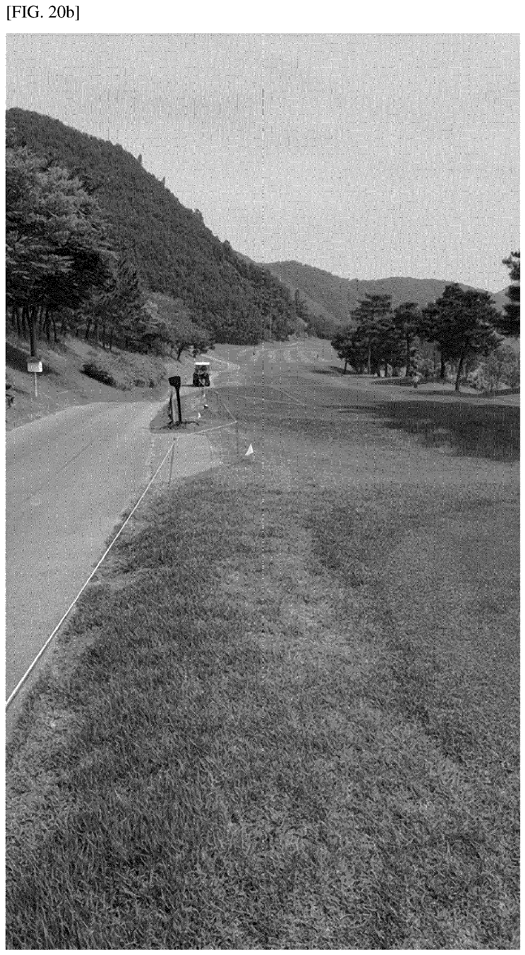

As shown in FIGS. 20A and 20B, it was confirmed that when the bentonite for the soil-improving agent was treated to grass (FIG. 20A) without treating the bentonite for the soil-improving agent (FIG. 20B), after about 10 days, in grass with poor growth (root taking disorder), the growth returned correctly.

### 14. Small green onions

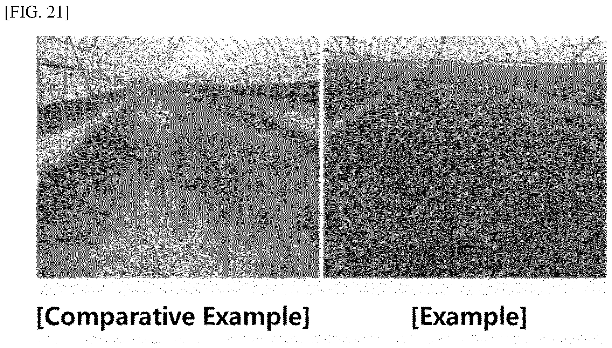

As shown in FIG. 21, it was confirmed that small green onions of Example grown by treating the bentonite for the soil-improving agent were stable in growth even in a high temperature, increased in sizes of leaves, and improved in leaf colors compared to small green onions of Comparative Example grown without treating the bentonite.

### 15. Sesame

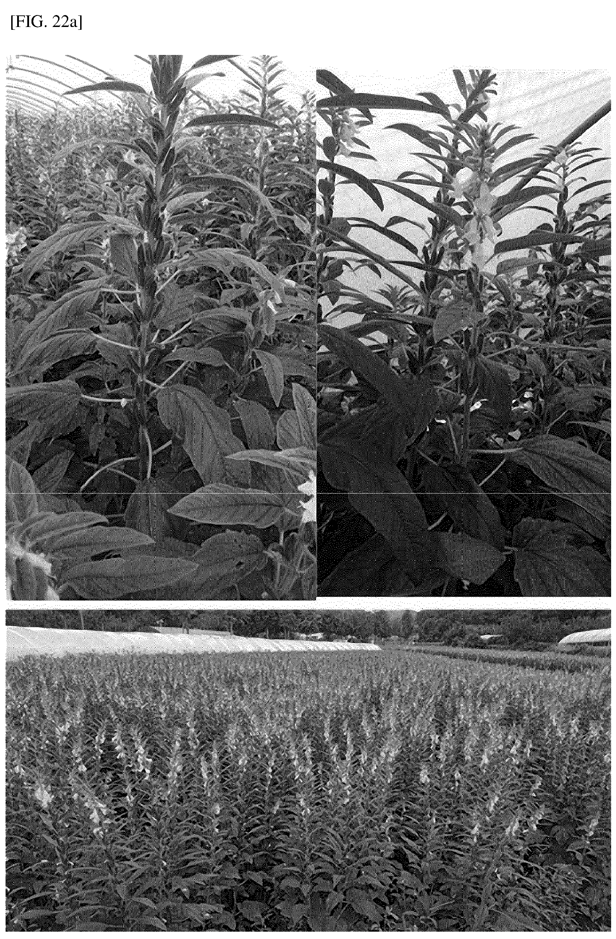

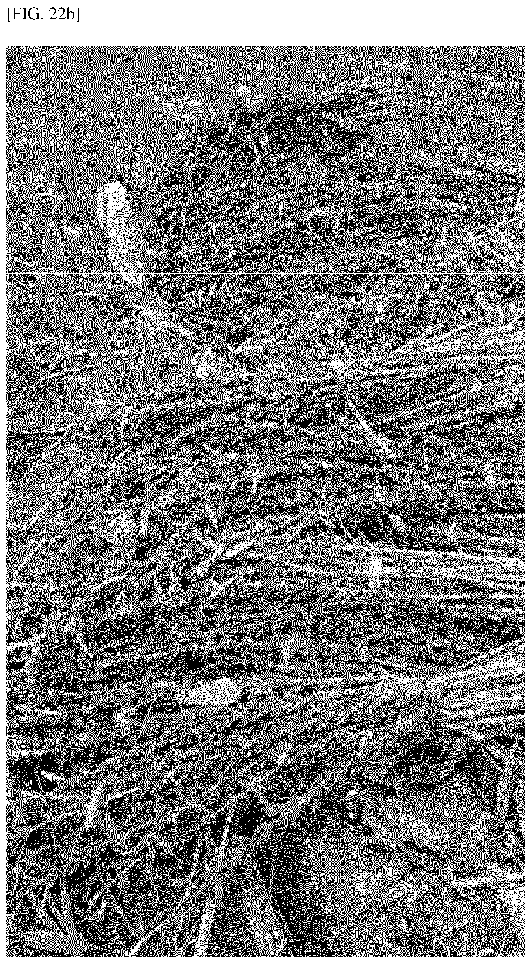

As shown in FIGS. 22A and 22B, it was confirmed that sesame of Example grown by treating the bentonite for the soil-improving agent was increased in the yield and mostly full of sesame compared to sesame of Comparative Example grown without treating the bentonite. In addition, it was confirmed that the growth of sesame was constant and properly grown.

16. Korean melon

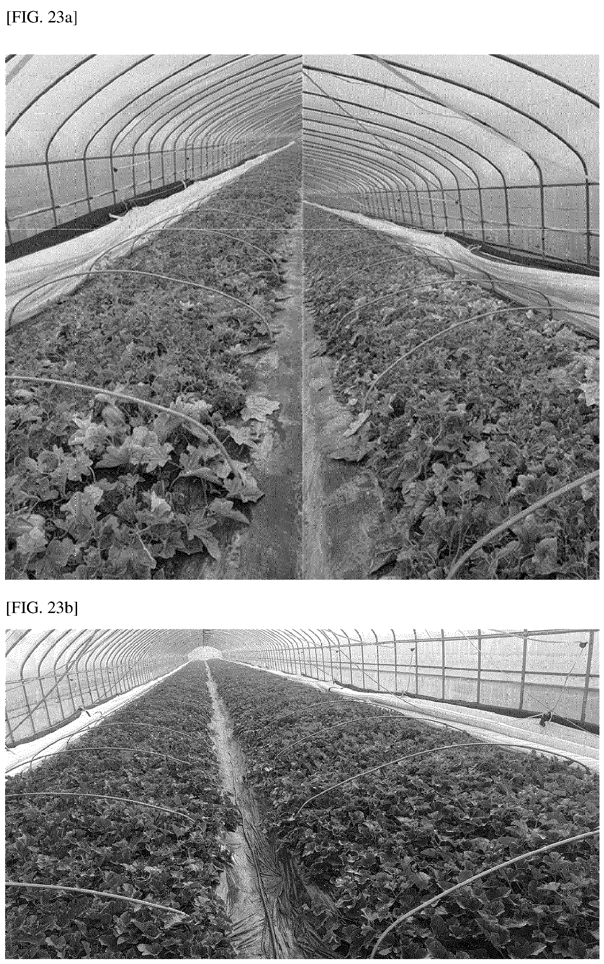

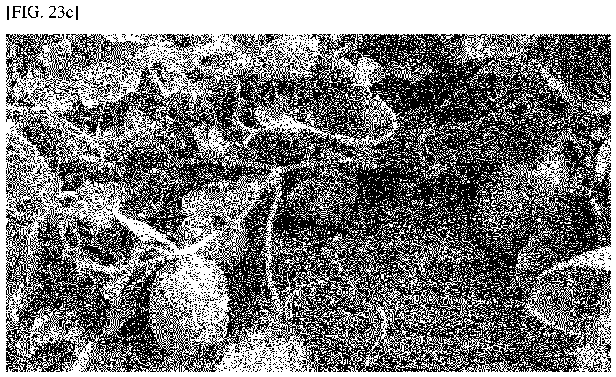

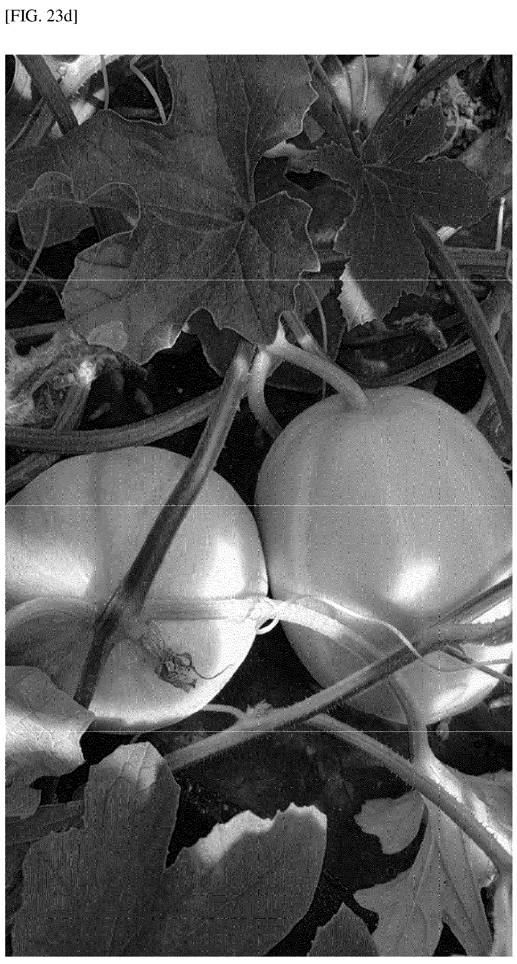

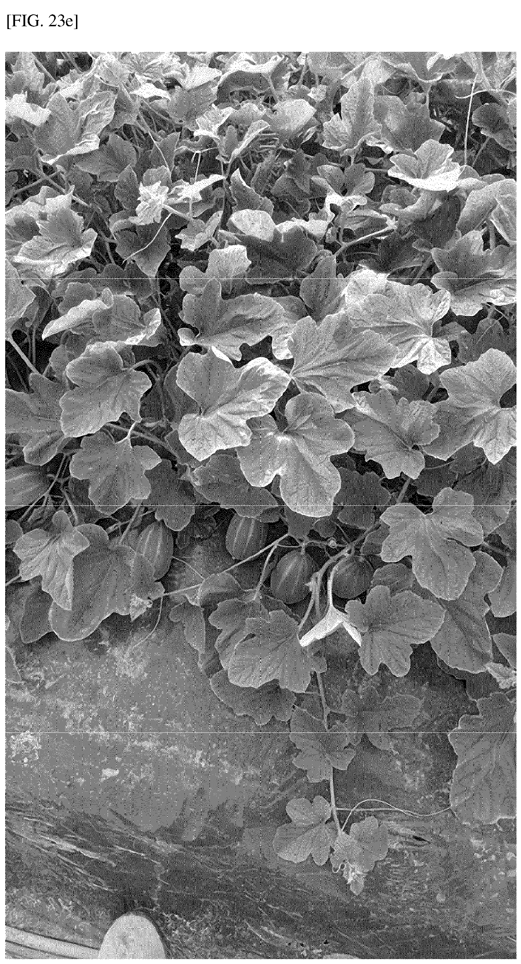

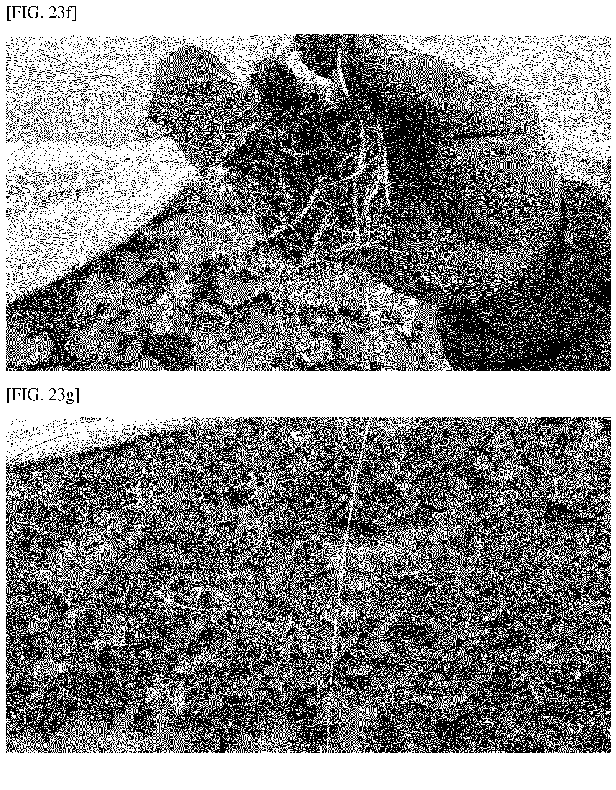

As shown in FIG. 23A, in the case of Korean melons grown without treatment with the bentonite for the soil-improving agent, the aging of vines proceeded a lot, and the vines sank due to a small volume of fine roots (high yield was impossible). On the other hand, as shown in FIGS. 23B to 23G, Korean melons of Example grown by treating the bentonite for the soil-improving agent had vibrant vines and prevented aging, and had tree vigor maintained even when many fruits hung (FIG. 23B). In addition, it was confirmed that the Korean melons grew while holding the fruit shape (the volume of fine roots was large, FIG. 23C), and the color was very clear and smooth (5 times or more increased digestion and absorption efficiency of phosphoric acid and digestion and absorption efficiency of undigested nitrogen, FIG. 23D). In addition, even though many fruits hung on the plant, it was confirmed that the plant endured (high yield was possible), and grew while inducing the initial root taking and balancing the vines from the beginning of Korean melon growth (FIGS. 23E to 23G).

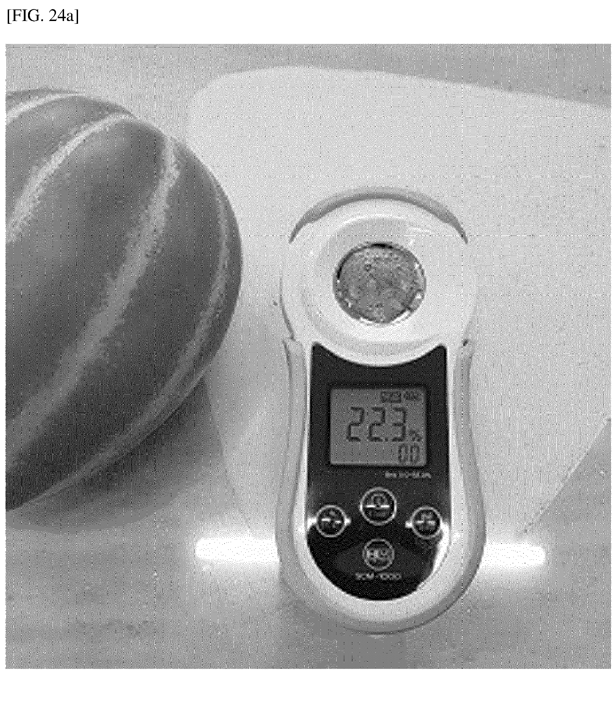

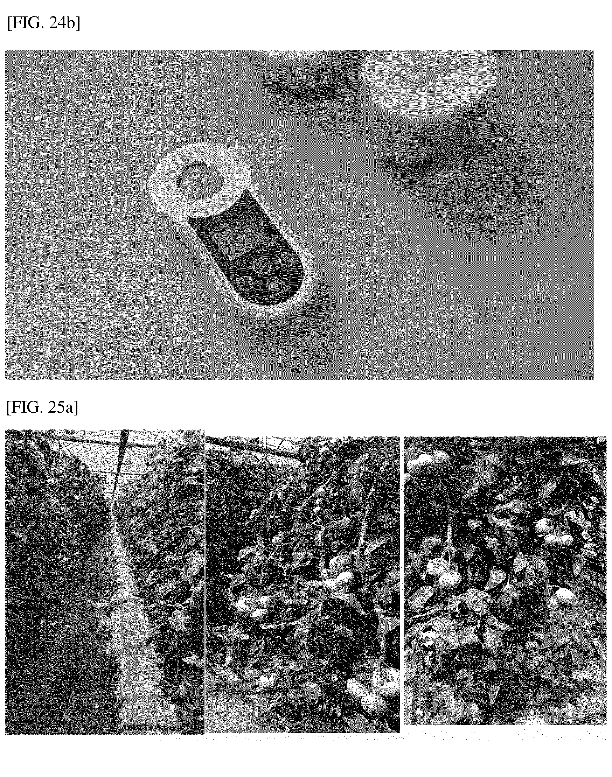

Meanwhile, as shown in FIGS. 24A and 24B, it was confirmed that the Korean melons of Example grown by treating the bentonite for the soil-improving agent had a sugar content of up to 22.3 brix, and it was confirmed that the Korean melons of Comparative Example grown without treating the bentonite for the soil-improving agent had the measured sugar content of 17 brix, so that there was a large difference in sugar content.

17. Tomato

As shown in FIG. 25A, it was confirmed that in tomato of Example grown by treating the bentonite for the soil-improving agent, high-quality and high-yield were possible, 5 to 7 flower clusters were further harvested than the existing number of 4 to 5 flower clusters (high yield), and the hypertrophy of tomato was made well due to the taking induction of fine roots and roots, prevention of root rot, moisturizing effect, and the ability to store nutrients.

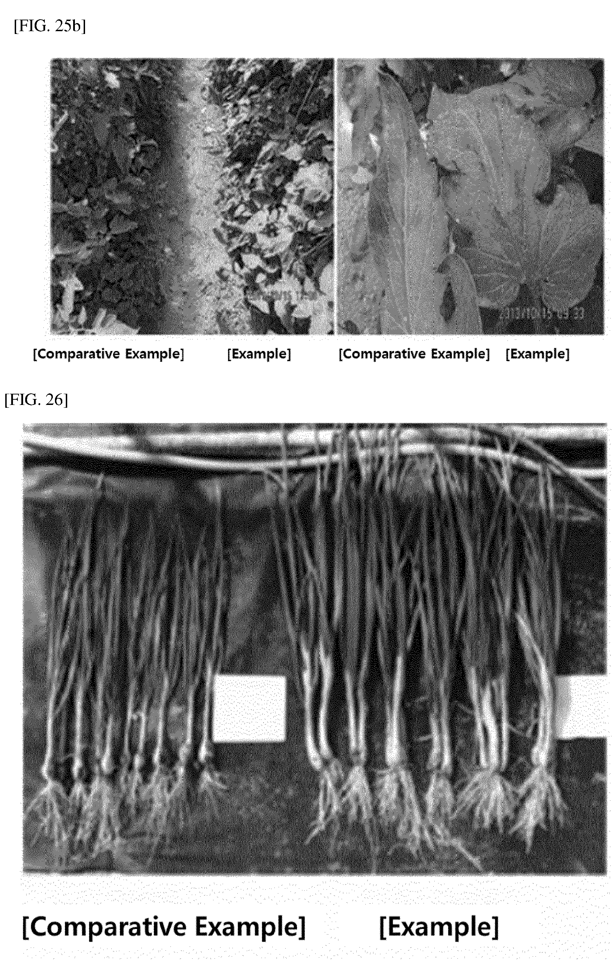

In addition, as shown in FIG. 25B, the tomato of Example grown by treating the bentonite for the soil-improving agent had a large difference in leaf size and leaf number and had a dark leaf color compared to tomato of Comparative Example grown without treating the bentonite for the soil-improving agent.

18. Green onions

As shown in FIG. 26, it was confirmed that green onions of Example grown by treating the bentonite for the soil-improving agent were improved in pollination and the amount of fruits and increased in yield and improved in storage compared to green onions of Comparative Example grown without treating the bentonite.

19. Flower (Lisianthus)

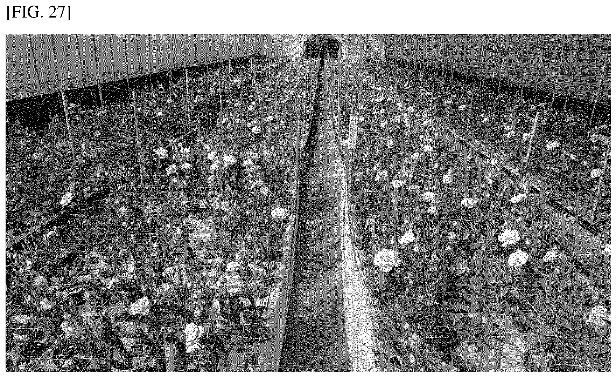

As shown in FIG. 27, it was confirmed that in flower (Lisianthus) of Example grown by treating the bentonite for the soil-improving agent, the internode length became shorter and thicker, and the flower buds were made larger.

At this time, as the method of using the bentonite for the soil-improving agent, 500 g of one bag per 200 pyeong was used on 15 days, and when using granules, 2 to 4 bags per 200 pyeong (4 bags included extra fertilizer) were used.

Hereinabove, the present invention has been described in detail along with preferred examples with reference to the drawings, but the scope of the technical spirit of the present invention is not limited to these drawings and examples. Accordingly, various modifications or equivalent ranges of examples may exist within the scope of the technical spirit of the present invention. Therefore, the scope of the technical idea according to the present invention should be interpreted by the appended claims, and the technical idea within the same or equivalent scope should be interpreted as belonging to the scope of the present invention.

**Claims**

1. Bentonite for a soil-improving agent, wherein

   the bentonite is calcium (Ca)-based bentonite, and
   is **characterized by** including a peak at a 2θ value of 4° to 8° in an X-ray diffraction (XRD) graph.

2. The bentonite for the soil-improving agent of claim 1, wherein the bentonite for the soil-improving agent includes 50 parts by weight to 99 parts by weight of montmorillonite based on 100 parts by weight of the total bentonite.

3. The bentonite for the soil-improving agent of claim 2, wherein the bentonite for the soil-improving agent further includes a material selected from the group consisting of $SiO_2$, $Al_2O_3$, $Fe_2O_3$, CaO, MgO, $K_2O$, $Na_2O$, $TiO_2$, $P_2O_5$, MnO, and combinations thereof.

4. The bentonite for the soil-improving agent of claim 3, wherein with respect to 100 parts by weight of the $SiO_2$,

the content of $Al_2O_3$ is 20 parts by weight to 30 parts by weight,
the content of $Fe_2O_3$, CaO or MgO is 1 part by weight to 10 parts by weight, and
the content of $K_2O$, $Na_2O$, $TiO_2$, $P_2O_5$ or MnO is 0.01 part by weight to 1 part by weight.

5. The bentonite for the soil-improving agent of claim 1, wherein the bentonite for the soil-improving agent has a powdered or granular form.

6. The bentonite for the soil-improving agent of claim 5, wherein 70 g to 2 kg of the powdered bentonite for the soil-improving agent is fertilized in an area of 100 pyeong to 500 pyeong.

7. The bentonite for the soil-improving agent of claim 5, wherein 10 kg to 350 kg of the granular bentonite for the soil-improving agent is fertilized in an area of 100 pyeong to 500 pyeong.

8. The bentonite for the soil-improving agent of claim 1, wherein in the bentonite for the soil-improving agent,

in the case of excessive nutritive growth such as excessive growth, overgrowth, and succulent growth of a target crop,
the bentonite for the soil-improving agent is irrigated with 70 g to 2 kg/300 pyeong soil, or
based on 70 g to 2 kg, a 500 to 1,000-fold dilution of the bentonite for the soil-improving agent, a 100 to 500-fold dilution of an inhibitor, and a 1,500 to 2,500-fold dilution of a microelement are foliar-fertilized.

9. The bentonite for the soil-improving agent of claim 1, wherein in the bentonite for the soil-improving agent,

in the case of water loss in the soil, drought, and improvement of plant balance,
the bentonite for the soil-improving agent is irrigated with 70 g to 2 kg/300 pyeong soil and fertilized.

10. The bentonite for the soil-improving agent of claim 1, wherein in the bentonite for the soil-improving agent,

in the case of the occurrence of diseases such as root rot, soft disease, or powdery mildew of a target crop,
based on 70 g to 2 kg, a 500 to 1,000-fold dilution of the bentonite for the soil-improving agent is mixed with the corresponding disinfectant and foliar-sprayed, or
the bentonite for the soil-improving agent is irrigated with 70 g to 2 kg/300 pyeong soil.

11. The bentonite for the soil-improving agent of claim 1, wherein in the bentonite for the soil-improving agent,

in the case of growth degradation of target crops caused by phytotoxicity, cold-weather damage, high temperature disorder, or gas disorder,
the bentonite for the soil-improving agent and an amino acid agent are irrigated with 70 g to 2 kg/300 pyeong soil, or
based on 70 g to 2 kg, a 500 to 1,000-fold dilution of the bentonite for the soil-improving agent and a 100 to 1,000-fold dilution of an amino acid agent are fertilized.

12. The bentonite for the soil-improving agent of claim 1, wherein in the bentonite for the soil-improving agent,

in the case of occurrence or prevention of excessive soil moisture, falling of crops due to climatic instability, salt disturbance, and replant failure,
the bentonite for the soil-improving agent is irrigated with 70 g to 2 kg/300 pyeong soil and fertilized, or
based on 70 g to 2 kg, a 500 to 1,000-fold dilution of the bentonite for the soil-improving agent is foliar-sprayed and fertilized.

13. The bentonite for the soil-improving agent of claim 1, wherein in the bentonite for the soil-improving agent,

in the case of poor growth, such as poor roots and low tree vigor of a target crop,
the bentonite for the soil-improving agent is irrigated with 70 g to 2 kg/300 pyeong soil, or
based on 70 g to 2 kg, a 500 to 1,000-fold dilution of the bentonite for the soil-improving agent and a 500 to 1,000-fold dilution of an amino acid agent are foliar-sprayed and fertilized.

14. The bentonite for the soil-improving agent of claim 1, wherein the bentonite for the soil-improving agent is mixed with the soil, and
an absolute value of a change in electrical conductivity (ms/cm) of the soil after 1 year calculated by Equation 1 below is 50% or more.

[Equation 1]

$$\text{Electrical conductivity change (\%)}$$

$$= \frac{\text{Electrical conductivity of soil after 1 year} - \text{Electrical conductivity of soil before treatment with bentonite}}{\text{Electrical conductivity of soil before treatment with bentonite}} \times 100$$

15. The bentonite for the soil-improving agent of claim 1, wherein the bentonite for the soil-improving agent is mixed with the soil, and
a change in pH of the soil after 1 year calculated by Equation 2 below is 5% or more.

[Equation 2]

$$\text{pH change (\%)} = \frac{\text{pH of soil after 1 year} - \text{pH of soil before treatment with bentonite}}{\text{pH of soil before treatment with bentonite}} \times 100$$

16. The bentonite for the soil-improving agent of claim 1, wherein the bentonite for the soil-improving agent is mixed with the soil, and
an absolute value of a change in total dissolved solid (TDS, ppm) of the soil after 1 year calculated by Equation 3 below is 15% or more.

[Equation 3]

$$\text{TDS change (\%)} = \frac{\text{TDS of soil after 1 year} - \text{TDS of soil before treatment with bentonite}}{\text{TDS of soil before treatment with bentonite}} \times 100$$

(In Equation 3, TDS is calculated by the Australian formula (EC X 700))

17. A soil-improving agent comprising the bentonite for the soil-improving agent of claim 1.

18. The soil-improving agent of claim 17, further comprising:
a material selected from the group consisting of potassium phosphate, calcium phosphate, sulfur, copper, iron, molybdenum, an amino acid agent, and combinations thereof.

[FIG. 1]

[FIG. 2]

[FIG. 3]

| | | |
|---|---|---|
| As | ppm | 7 |
| Pb | ppm | 45 |
| Cr | ppm | 1 |
| Cd | ppm | 0,4 |
| Ni | ppm | 2 |
| Zn | ppm | 74 |
| Cu | ppm | 3 |
| Hg | ppm | <0,1 |
| Mn | ppm | 360 |
| Ba | ppm | 69 |
| Sn | ppm | 1 |
| Co | ppm | 2 |
| Mo | ppm | 1 |
| Sb | ppm | <1 |
| Tl | ppm | <1 |
| Se | ppm | <1 |
| V | ppm | 9 |
| Bi | ppm | <1 |
| Ga | ppm | 10 |
| In | ppm | 1 |
| Li | ppm | 29 |
| Sr | ppm | 130 |
| La | ppm | 28 |
| Sc | ppm | 2 |
| Zr | ppm | 91 |
| Be | ppm | 4 |
| Y | ppm | 17 |
| P | ppm | 62 |
| S | ppm | 74 |

[FIG. 4]

[FIG. 5]

# TEST REPORT

Gyoyugwon-ro 98 (Jungang-dong), Gwacheon-si,

Gyeonggi-do 13810, Rep. of Korea

Report no. : TAK-2020-173448

Representative : Jae-Byeok JO

Company Name : Shinpoong NCS Co., Ltd.

TEL （053） 384-1910

FAX （053） 384-1915

Date of reception ： November 19, 2020

Date of test completion : December 04, 2020

Address : Kyungwoon University Incubation Center, 102, 131, Indeok 1-gil, Sindong-myeon,

Gumi-si, Gyeongsangbuk-do, Rep of Korea

Sample Name: Client (Granular Bentonite)

**Test result**

| Test Items | Unit | Sample classification | Result value | Test method |
|---|---|---|---|---|
| $SiO_2$ | % | - | 64.1 | KS L 3316:2014 （Adapt rule） |
| $Al_2O_3$ | % | - | 15.2 | KS L 3316:2014 （Adapt rule） |
| $Fe_2O_3$ | % | - | 2.89 | KS L 3316:2014 （Adapt rule） |
| CaO | % | - | 2.45 | KS L 3316:2014 （Adapt rule） |
| MgO | % | - | 3.03 | KS L 3316:2014 （Adapt rule） |
| $K_2O$ | % | - | 0.45 | KS L 3316:2014 （Adapt rule） |
| $Na_2O$ | % | - | 0.33 | KS L 3316:2014 （Adapt rule） |
| $TiO_2$ | % | - | 0.37 | KS L 3316:2014 （Adapt rule） |
| $P_2O_5$ | % | - | 0.10 | KS L 3316:2014 （Adapt rule） |
| MnO | % | - | 0.04 | KS L 3316:2014 （Adapt rule） |
| lg.loss | % | - | 10.9 | KS L 3316:2014 （Adapt rule） |

- Use ： For quality control

Note ： 1. This report is the result of testing with the sample and sample name presented by the client, and does not guarantee the quality of the entire product. You can check the authenticity of the transcript on the website (www.ktr.or.kr) or by using the QR code.

2. This report cannot be used for publicity, propaganda, advertising or litigation, and any other use is prohibited.

3. Only the original (including reissue) of this report is valid, and copies and electronic print/file copies are for reference only.

Writer ： Chang-Gi HONG

Tel ： 02-2092-3784

Technical manager ： Sang-Won HAN

Tel ： 1577-0091 （ARS①→④）

December 04, 2020

# KTR Korea Testing & Research Institute Director

[FIG. 6a]

[FIG. 6b]

[FIG. 7a]

[FIG. 7b]

[FIG. 8]

[Example]    [Comparative Example]

[FIG. 9]

[FIG. 10a]

[Example]

[FIG. 10b]

[Comparative Example]

[FIG. 11]

[Example]          [Comparative Example]

[FIG. 12]

[Comparative Example]          [Example]
- Used at interval of 15 days

[Example]
- Used at interval of 5 days

[FIG. 13]

**[Comparative Example]**      **[Example]**

[FIG. 14]

[FIG. 15]

[FIG. 16]

[Comparative Example]          [Example]

[FIG. 17]

[FIG. 18]

[FIG. 19]

[Comparative Example]          [Example]

[FIG. 20a]

[FIG. 20b]

[FIG. 21]

[Comparative Example]     [Example]

[FIG. 22a]

[FIG. 22b]

[FIG. 23a]

[FIG. 23b]

[FIG. 23c]

[FIG. 23d]

[FIG. 23e]

[FIG. 23f]

[FIG. 23g]

[FIG. 24a]

[FIG. 24b]

[FIG. 25a]

[FIG. 25b]

[Comparative Example]    [Example]    [Comparative Example]    [Example]

[FIG. 26]

[Comparative Example]    [Example]

[FIG. 27]

## INTERNATIONAL SEARCH REPORT

| International application No. |
|---|
| **PCT/KR2021/006094** |

### A. CLASSIFICATION OF SUBJECT MATTER

**C09K 17/02**(2006.01)i; C09K 101/00(2006.01)n

According to International Patent Classification (IPC) or to both national classification and IPC

### B. FIELDS SEARCHED

Minimum documentation searched (classification system followed by classification symbols)

C09K 17/02(2006.01); A01G 22/00(2018.01); A01N 59/06(2006.01); C05D 3/00(2006.01); C05F 11/00(2006.01); C05F 11/04(2006.01); C05F 5/00(2006.01); C05G 3/00(2006.01); C05G 3/04(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 벤토나이트(bentonite), 몬모릴로나이트(Montmorillonite), 토양개선제(soil improvement agent)

### C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 02-060709 B2 (TAC HASEGAWA KK) 18 December 1990.<br>See column 5-lines 38-42, column 6-lines 44-45 and claim 1. | 1-3,5-7,14-18<br>4<br>8-13 |
| Y | CN 109095996 A (INSTITUTE OF AGRICULTURAL RESOURCES AND REGIONAL PLANNING, CHINESE ACADEMY OF AGRICULTURAL SCIENCES et al.) 28 December 2018 (2018-12-28)<br>See paragraphs [0057]-[0058]. | 4 |
| X | US 2020-0037614 A1 (SCANNELL, Christopher) 06 February 2020 (2020-02-06)<br>See paragraphs [0031] and [0065] and Table 1. | 1,2,5-7,14-18 |
| A | KR 10-1992-0004711 B1 (KÜRNER, Rudolf) 15 June 1992 (1992-06-15)<br>See entire document. | 1-18 |

| ✓ Further documents are listed in the continuation of Box C. | ✓ See patent family annex. |
|---|---|

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **23 August 2021** | **23 August 2021** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

## INTERNATIONAL SEARCH REPORT

| International application No. |
| --- |
| **PCT/KR2021/006094** |

### C.    DOCUMENTS CONSIDERED TO BE RELEVANT

| Category* | Citation of document, with indication, where appropriate, of the relevant passages | Relevant to claim No. |
| --- | --- | --- |
| A | KR 10-1915782 B1 (LEE, Myung Hee et al.) 12 November 2018 (2018-11-12)<br>    See entire document. | 1-18 |
| A | KR 10-1999-0033059 A (KIM, Soo Kil) 15 May 1999 (1999-05-15)<br>    See entire document. | 1-18 |

Form PCT/ISA/210 (second sheet) (July 2019)

**INTERNATIONAL SEARCH REPORT**
**Information on patent family members**

International application No.

**PCT/KR2021/006094**

| Patent document cited in search report | | | Publication date (day/month/year) | Patent family member(s) | | | Publication date (day/month/year) |
|---|---|---|---|---|---|---|---|
| JP | 02-060709 | B2 | | None | | | |
| CN | 109095996 | A | 28 December 2018 | None | | | |
| US | 2020-0037614 | A1 | 06 February 2020 | CA | 2976783 | A1 | 25 August 2016 |
| | | | | CN | 107529729 | A | 02 January 2018 |
| | | | | CN | 107529729 | B | 16 October 2020 |
| | | | | MX | 2017010533 | A | 14 March 2018 |
| | | | | US | 0251397 | B2 | 09 April 2019 |
| | | | | US | 2017-156337 | A1 | 08 June 2017 |
| | | | | WO | 2016-134087 | A1 | 25 August 2016 |
| KR | 10-1992-0004711 | B1 | 15 June 1992 | DE | 000003744317 | C1 | 24 May 1989 |
| | | | | EP | 0322831 | A1 | 05 July 1989 |
| | | | | JP | 02-502817 | A | 06 September 1990 |
| | | | | WO | 89-06223 | A1 | 13 July 1989 |
| KR | 10-1915782 | B1 | 12 November 2018 | KR | 10-2018-0119724 | A | 05 November 2018 |
| KR | 10-1999-0033059 | A | 15 May 1999 | KR | 10-0240297 | B1 | 01 February 2000 |

Form PCT/ISA/210 (patent family annex) (July 2019)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020200126481